# EUROPEAN PATENT APPLICATION

(11) **EP 2 015 608 A1**
(43) Date of publication of application: **14.01.2009**
(21) Application number: 07013838.3
(22) Date of filing: 13.07.2007
(51) Int. Cl.: H04W 28/18

(54) **Interactive selection of a service during a mobile terminating call with service change and UDI fallback ("SCUDIF")**

(71) Applicant: Nokia Siemens Networks Oy, 02610 Espoo (FI)
(72) Inventor: Wopkes, Marco, 85748 Garching b. München (DE); Zaus, Robert, Dr., 80686 München (DE)
(74) Representative: Bruglachner, Thomas E.

(57) **Abstract**

The present invention relates to a method for selecting a service when establishing a call to a user equipment ("UE") via a communication network, in particular a cellular mobile network, comprising the steps of: receiving a setup message from a communication network at the user equipment ("UE"), wherein the setup message includes at least two bearer capability parameters ("BC") representing the available services, generating an output at the user equipment ("UE") based at least on the two bearer capability parameters ("BC"), receiving an input by the user at the user equipment ("UE"), thereby selecting from the generated output an available service, generating a confirmation message at the user equipment ("UE") based on the selected service, and sending the confirmation message from the user equipment ("UE") to the communication network.

## Description

The present invention relates to a method and an apparatus for an interactive selection of a service during establishing a call between user equipments ("UE"). In particular the present invention relates to a method for establishing a call offering service change and UDI fallback ("SCUDIF") in a cellular mobile network.

During the establishment of a connection in a cellular mobile network between a caller and a callee, information has to be exchanged prior to the connection defining if the connection shall be a voice call or a data call, such as a video call. There is also the possibility that the respective call is a voice call followed by a data call or a data call followed by a voice call within the same connection. Therefore, the order of voice and data has to be configured during the call establishment prior to the connection.

Furthermore, if more than one service can be used within the same connection, caller and callee can negotiate during the establishment of the call whether only a single change from the first service to the second service is possible ("first service followed by second service") or multiple changes between the services are allowed during the life time of the connection ("alternate first and second service, beginning with first service").

For configuring the order of voice and data respective parameters (bearer capability parameters) are used. The number and order of the parameters define the available services (voice, data, video) as well as the order of the services. An additional parameter (repeat indicator) is used to signal whether only a single change or multiple changes between the services are allowed.

When a caller wants to establish a connection to a callee using SCUDIF, the user equipment ("UE") of the callee receives a setup message ("SM") from a communication network, wherein the setup message can include at least a repeat indicator ("RI") and at least two bearer capability parameter ("BC") representing the available services and the order of services.

In the following description service change and UDI fallback ("SCUDIF") is used as defined in 3GPP TS 23.172 "Group Core Network and Terminals; Technical realization of Circuit Switched (CS) multimedia service UDI/RDI fallback and service modification".

For establishing the connection, the user equipment ("UE") of the callee has to send a confirmation message ("CM") to the communication network, wherein the confirmation message has a similar content and structure as the setup message. When sending the confirmation message the callee has the following options: He can accept the available services and the order of services, he can accept the available services but change the order of services, or he can disable one of the available services. If the callee accepts the available services and the order of services he can send a confirmation message to the communication network either including the repeat indicator ("RI") and the bearer capability parameters ("BC") with the same values and the same order of sequence as received in the setup message or without including any repeat indicator ("RI") and bearer capability parameter ("BC"). For the service change and UDI fallback ("SCUDIF") 3GPP TS 23.172 only specifies the first option. Furthermore, the repeat indicator ("RI") is always set to "alternate first and second service, beginning with first service".

Currently, the user equipment of the callee has to be preconfigured such that one out of the above mentioned confirmation massages is sent upon reception of a setup message.

This results in the disadvantage that the callee has to configure the user equipment according to the service provided with the next connection prior to a possible connection. In other words, the user equipment has to be configured statically, so that a confirmation message can be automatically generated after an incoming SCUDIF call has been received.

Accordingly, it is an objective of the present invention to overcome the disadvantages of the current solution. It is further an objective of the present invention to provide a method for configuring a user equipment prior to the establishment of a connection on a case-by-case basis.

In order to attain the above objects, the present invention provides a method and an apparatus configured to carry out the same as defined in the independent claims. The dependent claims relate to preferred embodiments.

Preferably, a method for selecting a service when establishing a call to a user equipment ("UE") via a communication network, in particular a cellular mobile network, can comprise at least one of the steps of: receiving a setup message from a communication network at the user equipment ("UE"), wherein the setup message includes at least two bearer capability parameters ("BC") representing the available services, generating an output at the user equipment ("UE") based at least on the two bearer capability parameters ("BC"), receiving an input by the user at the user equipment ("UE"), thereby selecting from the generated output an available service, generating a confirmation message at the user equipment ("UE") based on the selected service, and/or sending the confirmation message from the user equipment ("UE") to the communication network.

This has the advantage that the user equipment notifies the user at a point in time at which a connection is not yet established, so that the user is able to influence the kind of the service accepted as well as the order of the services.

Further preferably, the confirmation message can include one, two or no bearer capability parameters ("BC"). This has the advantage that the services accepted by the callee can be changed, reconfigured and/or reordered.

Preferably, the order of the bearer capability parameters ("BC") in the confirmation message can be configurable by the input, wherein the first bearer capability parameter ("BC") may represent the service to be used at the beginning of the call. This has the advantage that the callee can change the order of the services dynamically.

Further preferably, the setup message and/or the confirmation message can include a repeat indicator ("RI") indicating whether a single change from the first service to the second service or multiple changes between the services are allowed during the life time of the connection.

Preferably, the confirmation message can include no bearer capability parameter ("BC") and no repeat indicator ("RI"), if the user selects to accept the call as offered by the communication network. This has the advantage that the confirmation message is shorter and can be transmitted in less time when the callee accepts the available services and the order thereof.

Further preferably, the confirmation message can include only one bearer capability parameter ("BC"), if the user selects to restrict the call to the service represented by this bearer capability parameter ("BC").

Preferably, the output at the mobile terminating side can be an audio and/or visual output. This has the advantage, that there can be a user notification prior to the establishment of a connection and the user can interact with the user equipment.

Further preferably, the output at the user equipment ("UE") can be configurable by an information element in the setup message, resulting in a dedicated output at the user equipment.

Preferably, generating an output at the user equipment ("UE") can be disabled at the user equipment ("UE"). Then the user equipment ("UE") generates a confirmation message based on a preset value.

Further preferably, the communication network can comprise a mobile switching centre ("MSC"), wherein the mobile switching centre exchanges the setup message and confirmation message with the user equipment ("UE"). The setup message and confirmation message are so called signaling messages.

Preferably, the confirmation message can be generated based on a preset value, when no input has been received within a predetermined time period, therefore the user can but does not need to interact with the user equipment.

Further preferably, the preset value and/or the predetermined time can be configurable at the user equipment.

Preferably, the confirmation message can be the first call control message ("call confirmed") which is returned by the user equipment ("UE") in response to the setup message.

Further preferably, the confirmation message can be a further call control message sent by the user equipment ("UE").

Preferably, the service to be selected can be a video call and another service to be selected is a voice call.

Further preferably, the method deploys service change and UDI fall back ("SCUDIF").

Preferably, a device, such as a mobile telephone, PDA, laptop etc. can be configured to execute the above described preferred method.

The above described features of the invention can be combined in any way as a whole or in part without departing from the scope of the disclosure of the invention.

In the following description and the enclosed drawings, in addition to preferred embodiments according to the present invention, examples useful for understanding the present invention can be found.

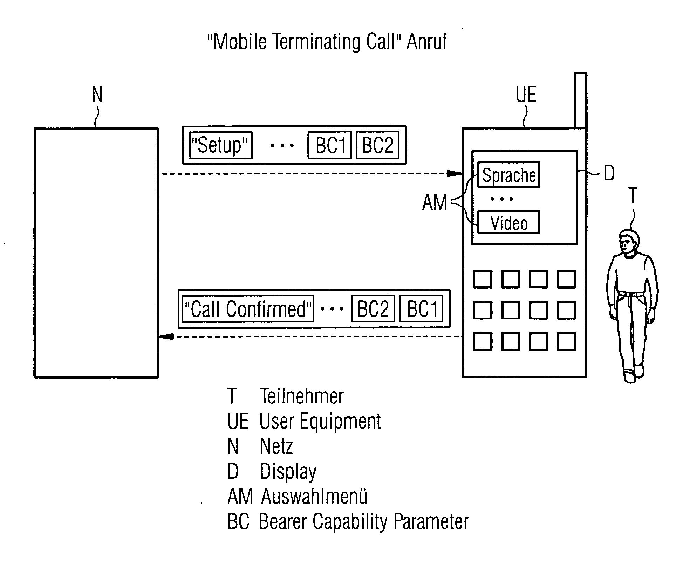

- Fig. 1: shows schematically the establishment of a mobile terminating call.

The user equipment ("UE") receives in the case of a mobile terminating call a setup message from the network ("N") comprising two bearer capability parameters ("BC1", "BC2"). After reception of the setup message, the user equipment ("UE") notifies the user ("T") and displays a selection menu ("AM") on the display of the user equipment ("UE"). The selection menu ("AM") shows the available services to choose from as well as the order of the services. The user ("T") can either accept the available services as well as the order of the services, or he can modify the available services as well as the order of the services. Based on the selection, the user equipment generates a call confirmed message comprising one, two or no bearer capability parameters ("BC1", "BC2") and transmits the call confirmed message to the network ("N").

## Claims

1. Method for selecting a service when establishing a call to a user equipment ("UE") via a communication network, in particular a cellular mobile network, comprising the steps of:
- receiving a setup message from a communication network at the user equipment ("UE"), wherein the setup message includes at least two bearer capability parameters ("BC") representing the available services,
- generating an output at the user equipment ("UE") based at least on the two bearer capability parameters ("BC"),
- receiving an input by the user at the user equipment ("UE"), thereby selecting from the generated output an available service,
- generating a confirmation message at the user equipment ("UE") based on the selected service, and
- sending the confirmation message from the user equipment ("UE") to the communication network.

2. Method according to claim 1, wherein the confirmation message includes one, two or no bearer capability parameters ("BC").

3. Method according to claim 1 or 2, wherein the order of the bearer capability parameters ("BC") in the confirmation message is configurable by the input, wherein the first bearer capability parameter ("BC") represents the service to be used at the beginning of the call.

4. Method according to at least one of the preceding claims, wherein the setup message and/or the confirmation message includes a repeat indicator ("RI") indicating whether a single change from the first service to the second service or multiple changes between the services are allowed during the life time of the connection.

5. Method according to at least one of the preceding claims, wherein the confirmation message includes no bearer capability parameter ("BC"), if the user selects to accept the call as offered by the communication network.

6. Method according to at least one of the preceding claims, wherein the confirmation message includes only one bearer capability parameter ("BC"), if the user selects to restrict the call to the service represented by this bearer capability parameter ("BC").

7. Method according to at least one of the preceding claims, wherein the output at the mobile terminating side is an audio and/or visual output.

8. Method according to at least one of the preceding claims, wherein the output at the user equipment ("UE") is configurable by an information element in the setup message.

9. Method according to at least one of the preceding claims, wherein generating an output at the user equipment ("UE") can be disabled in the user equipment ("UE").

10. Method according to at least one of the preceding claims, wherein the communication network comprises a mobile switching centre ("MSC"), wherein the mobile switching centre exchanges the setup message and confirmation message with the user equipment ("UE").

11. Method according to at least one of the preceding claims, wherein the confirmation message is generated based on a preset value, when no input has been received within a predetermined time period.

12. Method according to at least one of the preceding claims, wherein the preset value and/or the predetermined time are configurable in the user equipment ("UE").

13. Method according to at least one of the preceding claims, wherein the confirmation message is the first call control message ("call confirmed") which is returned by the user equipment ("UE") in response to the setup message.

14. Method according to at least one of the preceding claims, wherein the confirmation message is a further call control message sent by the user equipment ("UE").

15. Method according to at least one of the preceding claims, wherein the service to be selected is a video call and another service to be selected is a voice call.

16. Method according to at least one of the preceding claims, wherein the method further deploys service change and UDI fall back SCUDIF.

17. Device configured to execute the method according at least one of the preceding claims.
